# EUROPEAN PATENT SPECIFICATION

(11) **EP 2 077 713 B1**
(45) Date of publication and mention of the grant of the patent: **22.12.2010**
(21) Application number: 07818830.7
(22) Date of filing: 09.10.2007
(51) Int. Cl.: A01G 27/02

(54) **A PLANTER**
BLUMENKÜBEL
CACHE-POT

(30) Priority: 25.10.2006 IE 20060784
(43) Date of publication of application: 15.07.2009
(73) Proprietor: Christensen, Per, Gorey Wexford (IE)
(72) Inventor: Christensen, Per, Gorey Wexford (IE)
(74) Representative: Boyce, Conor
(86) International application number: PCT/EP2007/008757
(87) International publication number: WO 2008/049511

(56) References cited:
- EP-A- 0 065 161
- WO-A-2005/015981
- WO-A-2005/074385
- DE-A1- 2 509 724
- DE-A1- 3 320 600
- DE-A1- 4 226 035

## Description

The present invention relates to a planter for receiving plants and in particular a self-watering planter.

WO 2005/015981 discloses a planter in accordance with the preamble of claim 1, including a body which has an upper side, a lower side, a base on the lower side, an outer wall which extends upwardly from the base and an inner wall which is engaged with and spaced from the outer wall, a cavity formed by the body, a reservoir defined between the inner and outer walls which has an outlet therefrom into the cavity, an open ended fluid passage which has a first upper end which terminates in the reservoir and a second lower end which terminates in the cavity. An overflow formation extends from the body and is in communication with the cavity and a support platform in the cavity.

In order to re-fill the reservoir, a cap sealing the inlet is removed to allow a hose pipe to be located into the reservoir.

The planter relies on the cap sealing the reservoir when replaced so that capillary action draws water from the reservoir into the soil retained in the cavity, rather than the water flooding the cavity. However, such planters when located outdoors can be subject to heavy weathering and large scale changes in temperature. This means that a metal cap used with a metal bodied planter will be prone to corrosion and may stick in place, whereas a rubber cap having a different coefficient of expansion than say a metal body will not effectively seal the planter.

The object of the present invention is to mitigate the disadvantages associated with the prior art.

According to the present invention there is provided a planter characterised by a pipe arranged to be inserted into said second fluid passage for filling said reservoir, said pipe substantially sealing said outlet when filling said reservoir.

Preferably, said cavity is arranged to receive an insert which divides said cavity into an upper compartment for receiving soil and a lower sump arranged to receive fluid through said outlet from said reservoir.

Preferably, said second fluid passage is formed separately from said first fluid passage.

Alternatively, said first and second fluid passages are integrally formed.

Embodiments of the invention will now be described, by way of example, with reference to the accompanying drawings, in which:
Figure 1 is a cross-section view of a planter according to a preferred embodiment of the present invention;
Figure 2 is the planter of Figure 1 in use:
Figure 2a is an enlarged cross-sectional view of an alternative sealing arrangement of the planter of Figure 1;
Figure 3a is a top view of a planter according to an alternative embodiment of the present invention comprising an insert separating a sump of the planter into two regions;
Figure 3b is a cross-section view of the planter of Figure 3a;
Figure 4 is a cross-section view of a planter according to a further alternative embodiment of the present invention;
Figure 5 is a cross-section view of the planter of Figure 4 in use;
Figure 6a is a cross-section view of a planter according to a further alternative embodiment of the present invention;
Figure 6b is a cross-section view of the planter of Figure 6a comprising an external pipe;
Figure 7a is a cross-section view of a planter according to another further alternative embodiment of the present invention;
Figure 7b is a cross-section view of the planter of Figure 7a further comprising an external pipe;
Figure 8a is a cross-section view of a planter according to a still further alternative embodiment of the present invention; and
Figure 8b is a cross-section view of the planter of Figure 8a further comprising an external pipe.

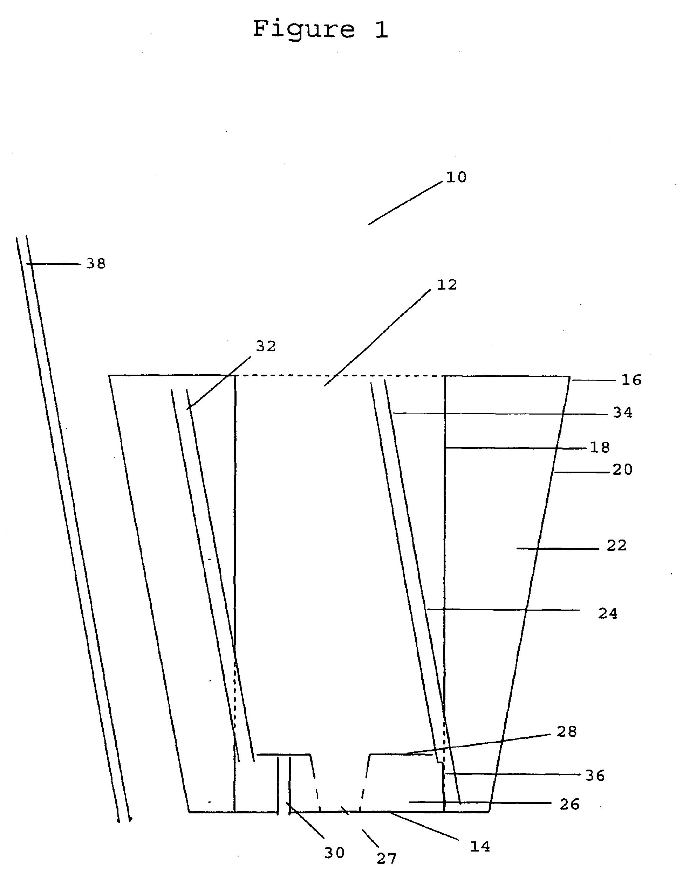

Referring now to Figure 1, there is illustrated a planter 10 according to a preferred embodiment of the present invention.

The planter 10 comprises a container 12 having a base 14, a top 16, and an inner wall 18 and an outer wall 20, defining therebetween an enclosed reservoir 22. An open-ended inner chamber (or cavity) 24 is defined by the inner wall 18 and is surrounded by the reservoir 22.

The container 12 of the preferred embodiment is generally cylindrical, but it will be appreciated in variations of the embodiment, the container 12 may be rectangular or indeed be formed with any required shape. Furthermore, the container need not be symmetrical in plan or elevation, so that for example, one side of the container can be higher than the other, so enabling the container to accommodate plants best viewed from the side or which need to be supported on one side.

The inner chamber 24 is arranged to receive soil for planting. An insert 28 is provided in a spaced relationship from the base of the chamber 24 defining therebetween a sump 26 below a compartment for receiving soil for planting. The insert 28 comprises a hollow central portion 27 in fluid communication with the sump 26. In use, the hollow central portion 27 fills with soil and thereby enables plants provided therein to absorb the water from the sump without allowing soil to enter the sump 26.

In a variation of the preferred embodiment, the insert 28 comprises a plurality of holes (not shown), through which wicks may be passed, for conveying water in the sump 26 to soil and plants located in the chamber 24 by way of capillary action.

The container 12 comprises a breather pipe 32, which extends from a position substantially close to a top region of the sump 26, passing through the chamber 24 and through the inner wall 18 to a position substantially close to the closed top of the reservoir 22.

A fill pipe 34 is provided within the container 12 and extends from substantially close to the base 14 of the container 12 within the reservoir 22, through the inner wall 18 to substantially close to the open top of the chamber 24.

An aperture, 36, provided in fill pipe 34 in the region of the wall 18, enables fluid communication between the reservoir 22 and the sump 26/inner chamber 24.

It will be appreciated, however, that the breather pipe and fill pipe may be positioned within the container in any suitable manner as long as fluid communication between the reservoir 22 and the sump 26/inner chamber 24 is possible.

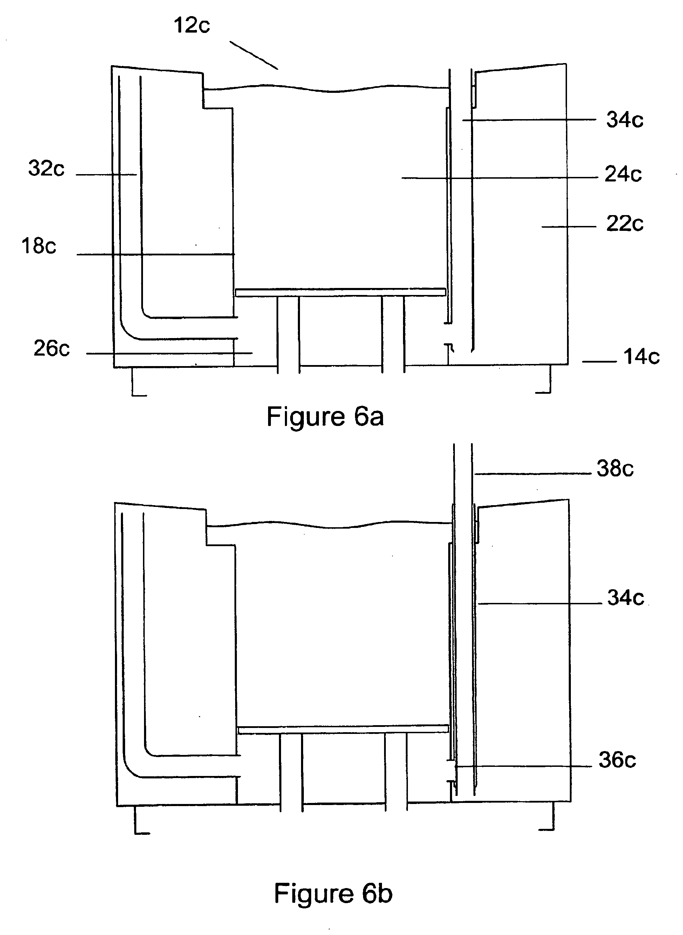

For example, as illustrated in Figures 6a and 6b, 7a and 7b, and 8a and 8b, the breather pipe 32c, 32d, 32e may extend from a position substantially close to a top region of the sump 26c, 26d, 26e through the inner wall 18c, 18d, 18e to a position substantially close to the closed top of the reservoir 22c, 22d, 22e without passing through the compartment of the chamber 24c, 24d, 24e.

Figures 6a and 6b further illustrate an alternative positioning of the fill pipe 34c. In this embodiment, the fill pipe 34c extends from substantially close to the base 14c of the container 12c within the reservoir 22c and exits to the chamber 24c through the inner wall 18c substantially close to the open top of the chamber 24c.

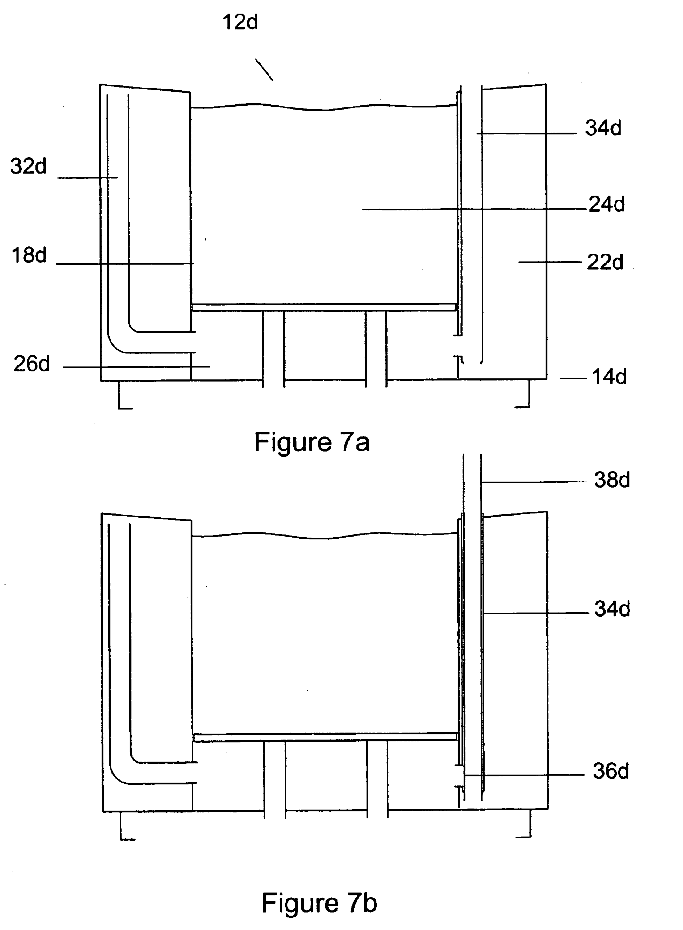

Figures 7a and 7b further illustrate an alternative positioning of the fill pipe 34d. In this embodiment, the fill pipe 34d extends from substantially close to the base 14d of the container 12d within the reservoir 22d through the closed top of the reservoir 22d without passing through the compartment of the chamber 24d.

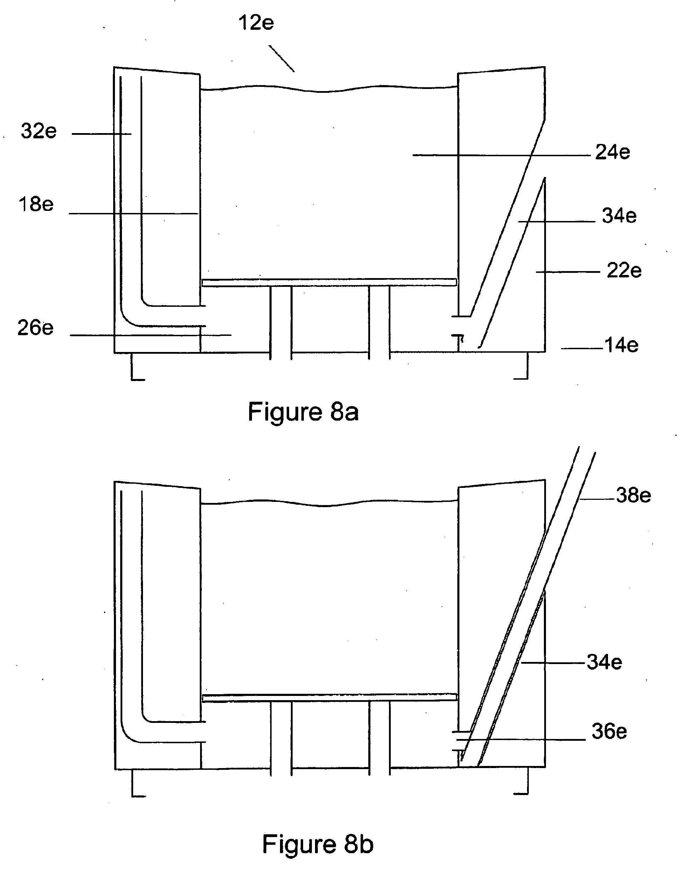

Figures 8a and 8b illustrate a further alternative positioning of the fill pipe 34e. In this embodiment, the fill pipe 34e extends from substantially close to the base 14e of the container 12e within the reservoir 22e through the outer wall 20e of the container 12e.

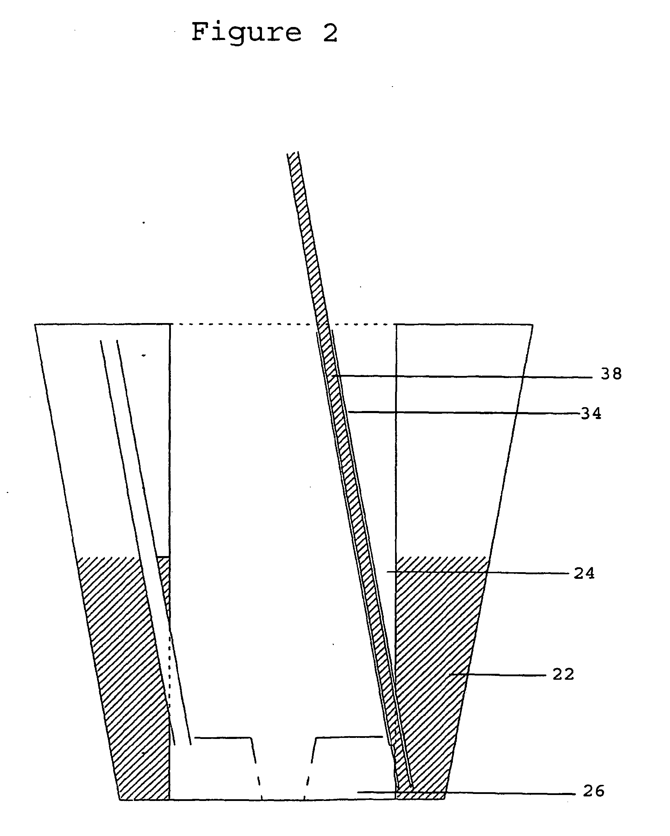

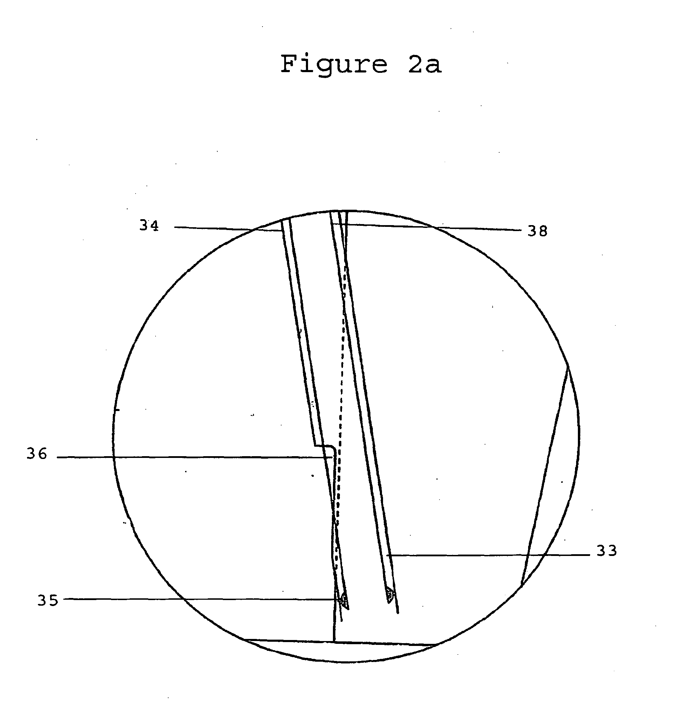

The fill pipe 34, 34c, 34d, 34e, is arranged to receive an external pipe 38, 38c, 38d, 38e as illustrated in Figure 2, Figure 2a, Figure 6b, Figure 7b and Figure 8b. The external pipe 38, 38c, 38d, 38e is designed such that when it is inserted into the fill pipe 34, 34c, 34d, 34e, it seals the aperture 36, 36c, 36d, 36e, thereby preventing fluid flow between the reservoir and the sump.

As illustrated in Figure 1, the sump 26 further comprises a drainpipe 30 to allow excess water to escape through the base 14 of the container, for example, when the planter 10 is used outdoors.

In use, according to the preferred embodiment, the external pipe 38 is inserted into the fill pipe 34, thereby sealing the aperture 36. Water, or any appropriate fluid, provided to the external pipe 38 is conveyed via the pipes, 34 and 38 to the reservoir 22, as illustrated in Figure 2.

For example, water may be supplied to the external pipe 38 by means of gardening hose or a watering can and funnel arrangement. Alternatively, the fill pipe 34 may be specifically designed to directly receive a typical gardening hose, or the like, to seal the aperture 36.

As the water enters the reservoir, air contained within the reservoir is driven from the reservoir 22 and escapes through the breather pipe 32 to the sump 26 of the open-ended inner chamber 24. This air then percolates through the soil to escape from the container. Advantageously, this air serves to aerate the soil provided in the chamber 24, thereby improving plant growth.

When filling a large planter it may not be possible for the air in the reservoir to percolate through the entire depth of soil within the container. In such cases, additional ventilation pipes (not shown) extending from the top of the inner chamber 24 above or around soil level to suitable depth(s) within the chamber can be fixed to the inside of the inner wall 18, so that air can vent as required. Alternatively, additional apertures can be formed along the length of the pipe 24. Unlike the aperture 36, these would not be sealed by the external pipe 38 and so could provide some ventilation through the fill pipe during filling.

Alternatively, as illustrated in Figure 2a, the external pipe 38 has a smaller diameter than that of the fill pipe 34 such that when inserted into the fill pipe, a gap 33 is provided between the two pipes, 34, 38. The gap 33 is sealed by means of an o-ring 35 provided on an internal circumference of the fill pipe 34, at a position below aperture 36. Alternatively, the o-ring 35 may be provided on an external surface of the external pipe 38.

Thus, while the fill pipe 34 fulfils the function of sealing the aperture 36 in the manner described in relation to the preferred embodiment, air displaced from the reservoir via the breather pipe to the sump, can escape from the container through aperture 36 to the gap 33 provided by the fill pipe/external pipe arrangement 34, 38.

Referring again to Figure 2, once sufficient fluid has been supplied, as indicated by a fluid level indicator (not shown) provided in the planter, the external pipe 38 is retracted from the planter 10, thereby re-establishing fluid communication between the reservoir and the chamber. Many possible fluid level indicators are possible, for example, a magnetic float located inside the reservoir or fill pipe could cooperate with an external marker, or vice versa, to indicate the level of water in the reservoir.

As water is conveyed from the reservoir 22 into the sump 26 via aperture 36, air is sucked up through the breather pipe 32 from the sump 26 in order to replace the water being drained from the reservoir 22. Again, this air is drawn through the soil provided in the chamber 24, so aerating the soil.

When the water level in the sump 26 reaches the breather pipe 32, airflow through the breather pipe 32 is blocked, resulting in a vacuum being created in the reservoir 22.

Once the water levels in the reservoir and breather pipe equalise, water flow through the aperture 36 terminates, as the force of the vacuum can no longer be overcome by the hydrostatic pressure in the reservoir 22.

As water is absorbed from the sump 26 by the soil, the water level in the sump drops to a level below the breather pipe 32, allowing air to be sucked up through the breather pipe to the reservoir. This results in the vacuum being overcome and water flows from the reservoir to the sump 26 until the water level in the sump 26 again rises to the breather pipe, hindering the suction of air.

In this manner, water is readily supplied to the soil and plants provided in the chamber 24 as required.

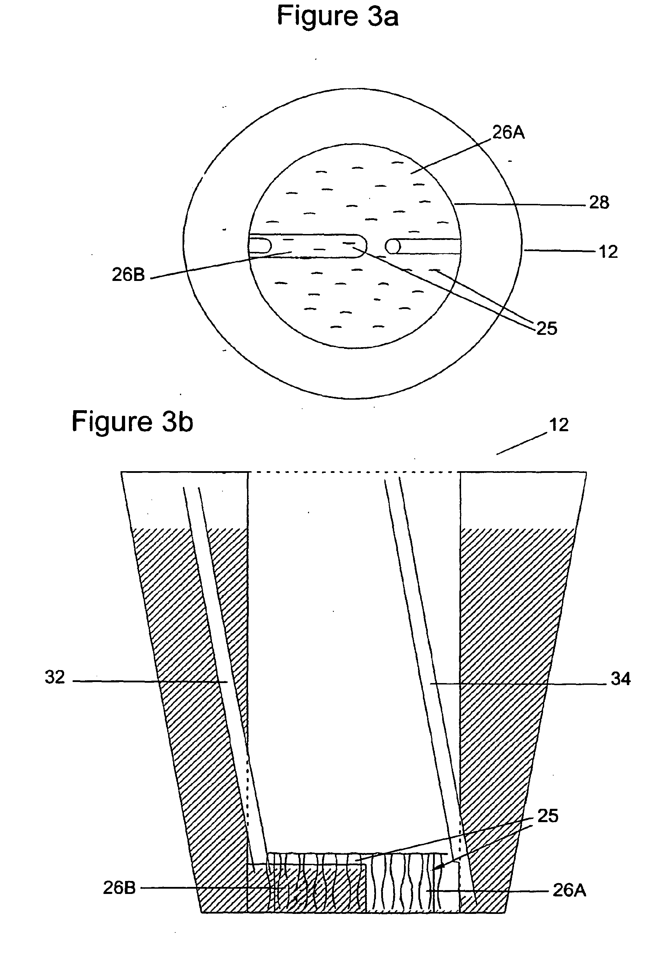

In an alternative embodiment of the present invention, as illustrated in Figure 3a and 3b, the insert 28 provided in the chamber 24 separates the sump 26 into a first area 26A and a second area 26B. The second area 26B is in fluid communication with the breather pipe 32.

The first area 26A comprises a plurality of wicks 25 enabling fluid communication between the sump area 26A and the soil provided in the chamber 24. Comparatively, the second area 26B comprises substantially fewer wicks 25 enabling fluid communication between the sump area 26A and the soil.

In use, the fluid from the first area 26A is absorbed at a faster rate than the fluid provided in the second area 26B. However, no additional fluid is drawn into the sump until the fluid is emptied from area 26A. In this manner, the planter 10 enables the soil and plants to absorb the fluid in a cyclic manner, providing a "dry out" interval as required by some plants.

Alternatively, the insert comprises a plurality of wicks of various lengths extending downward from a top surface of the insert. Thus, as the fluid level in the sump is reduced, fewer wicks provide fluid communication between the sump area and the soil in the chamber, thereby enabling the soil and plants to absorb the fluid in a cyclic manner. In an alternative embodiment, the plurality of wicks of various lengths may be replaced or supplemented with a plurality of channels of various lengths.

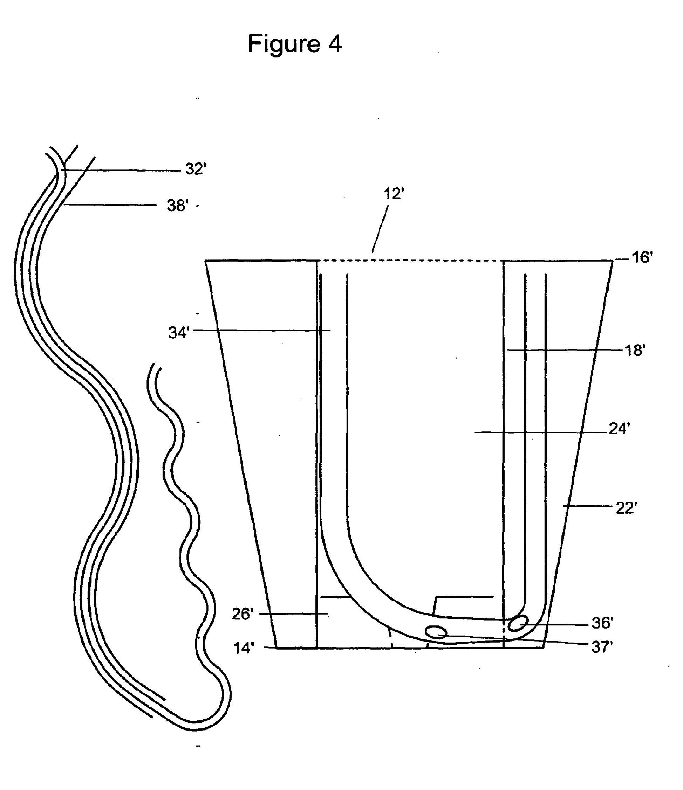

A further alternative embodiment of the present invention is illustrated in Figure 4.

The fill pipe 34' extends from substantially close to the top 16' of the container 12' within the reservoir 22', to substantially close to the base 14' of the reservoir 22', through the inner wall 18' to the sump 26' and to a position substantially close to the open top 16 of the chamber 24'.

The pipe 34' comprises a first aperture 36' which enables fluid communication between the pipe and the sump of the chamber 24' and a second aperture 37' which enables fluid communication between the pipe and the reservoir 22'.

The external pipe 38' and breather pipe 32' are arranged in a co-axial manner such that the breather pipe 32' is provided within the external pipe 38'.

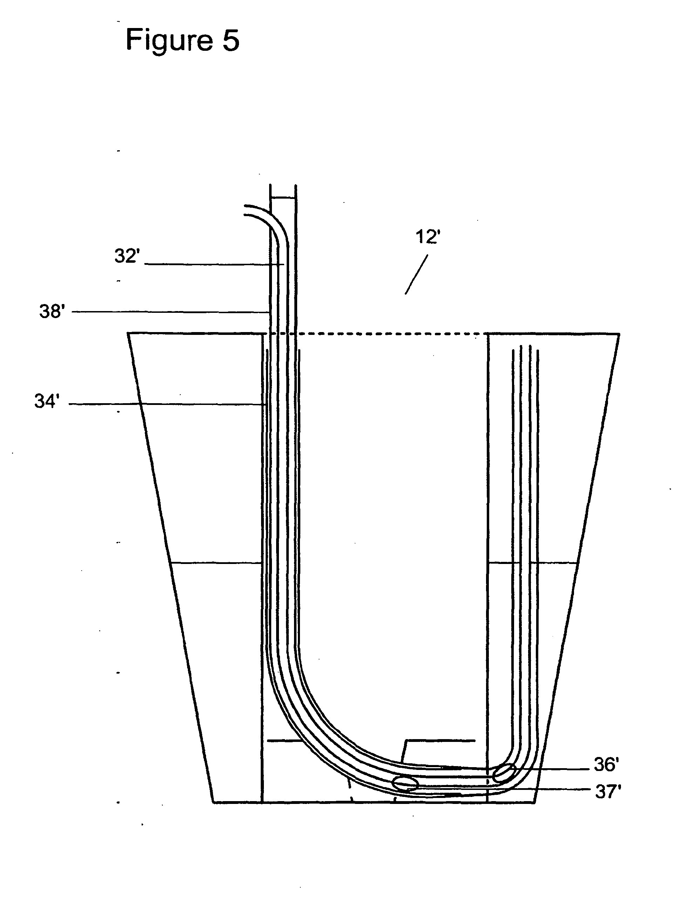

In use, as illustrated in Figure 5, the external pipe 38' is inserted into the pipe 34', thereby forming a seal with aperture 36' and preventing fluid communication being established between the pipe 34' and the chamber 24'.

Fluid supplied to the external pipe 38' is provided to the reservoir 22' via aperture 37'.

Upon removal of the external pipe 38', fluid communication is re-established between the sump and the pipe.

The invention is not limited to the embodiments described herein, which may be modified or varied, without departing from the scope of the invention as defined by the claims.

## Claims

1. A planter (10) comprising a body (12) having
an upper side (16);
a lower side;
a base (14) on the lower side;
an outer wall (20) which extends upwardly from the base (14);
an inner wall (18) which is engaged with and spaced from the outer wall (20);
a cavity (24) formed by the body (12);
a reservoir (22) defined between the inner (18) and outer (20) walls which has an outlet (36) therefrom into the cavity (24);
an open ended fluid passage (32) which has a first upper end which terminates in the reservoir (22);
a second lower end which terminates in the cavity (24); and
a second fluid passage (34) running from said reservoir (22) to an external face of said body (12);
said outlet (36) being formed in said second fluid passage (34);
**characterised in that** said planter (10) further comprises:
a pipe (38) arranged to be inserted into said second fluid passage (34) for filling said reservoir (22); and
wherein, in use, said pipe (38) substantially seals said outlet (36) when filling said reservoir (22).

2. The planter (10) according to claim 1 wherein said outlet (36) provides fluid communication between said reservoir (22) and said cavity (24).

3. The planter (10) according to any preceding claim wherein said cavity (24) is arranged to receive an insert (28) which divides said cavity into an upper compartment for receiving
soil and a lower sump (26) arranged to receive fluid through said outlet (36) from said reservoir (22).

4. The planter (10) according to claim 3 wherein said insert (28) comprises a hollow central portion (27) in fluid communication with said sump (26).

5. The planter (10) according to claim 3 wherein said insert (28) comprises a plurality of apertures arranged to receive wicks (25) for conveying fluid from said sump (26) to said upper compartment.

6. The planter (10) according to claim 5 wherein said insert (28) separates said sump (26) into a first (26A) and second area (26B), said second area (26B) arranged to be in fluid communication with said first fluid passage (32) and wherein said second area (26B) comprises substantially fewer apertures for receiving wicks (25) than said first area such that fluid is capable of being absorbed in a cyclic manner.

7. The planter (10) according to any preceding claim wherein said second fluid passage (34) is formed separately from said first fluid passage.

8. The planter (10) according to claim 7 wherein said first fluid passage (32) extends from said reservoir (22) directly to said sump (26) of said cavity (24).

9. The planter (10) according to any preceding claim wherein said cavity (24) comprises said external face to which said second fluid passage runs (34).

10. The planter (10) according to any preceding claim wherein said reservoir (22) comprises said external face to which said second fluid passage runs (34).

11. The planter (10) according to claim 10 wherein said external face is provided on said outer wall (20) of said reservoir (22).

12. The planter (10) according to claims 1 to 10 wherein said first and second fluid passages (34') are integrally formed and wherein said fluid passage (34') comprises a second outlet (37') providing fluid communication between said passage (34') and said reservoir (22') and wherein said fluid passage (34') is arranged to receive a pipe (38') comprising a second co-axial pipe provided within said pipe (32').

13. The planter (10) according to any preceding claim further comprising a fluid level indicator comprising a magnetic float located inside said reservoir (22) or fill pipe (34) and is arranged to cooperate with an external marker to indicate a fluid level in said reservoir (22).

14. The planter (10) according to any preceding claim further comprising at least one ventilation pipe extending from substantially close to the upper side (16) of the body (12) through said cavity (24) and preferably comprising at least one aperture disposed along the length of the ventilation pipe.

15. The planter (10) according to claims 1 to 14 wherein an o-ring (35) is disposed on an internal circumference of said second passage (34), or on an external circumference of said external pipe (38) below said outlet (36) and said second passage (34) comprises a diameter smaller than that of said external pipe (38) such that when said external pipe (38) is inserted, a ventilation gap (33) is provided.

## Patentansprüche

1. Pflanzvorrichtung (10), die Folgendes umfasst: einen Körper (12) mit
einer oberen Seite (16);
einer unteren Seite;
einem Boden (14) an der unteren Seite;
einer äußeren Wand (20), die sich von dem Boden (14) nach oben erstreckt;
einer inneren Wand (18), die mit der äußeren Wand (20) in Eingriff steht und von dieser beabstandet ist;
einen Hohlraum (24), der durch den Körper (12) gebildet wird;
einen Behälter (22), der zwischen der inneren (18) und äußeren (20) Wand begrenzt ist und einen Auslass (36) aus demselben in den Hohlraum (24) aufweist;
einen Flüssigkeitsdurchgang (32) mit offenem Ende, der ein erstes oberes Ende aufweist, welches in dem Behälter (22) endet;
ein zweites unteres Ende, das in dem Hohlraum (24) endet; und
einen zweiten Flüssigkeitsdurchgang (34), der von dem Behälter (22) zu einer Außenfläche des Körpers (12) verläuft;
wobei der Auslass (36) in dem zweiten Flüssigkeitsdurchgang (34) ausgebildet ist;
**dadurch gekennzeichnet, dass** die Pflanzvorrichtung (10) weiter Folgendes umfasst:
ein Rohr (38), das zur Einführung in den zweiten Flüssigkeitsdurchgang (34) zum Füllen des Behälters (22) eingerichtet ist; und
wobei das Rohr (38) in Gebrauch den Auslass (36) im Wesentlichen abdichtet, wenn der Behälter (22) gefüllt wird.

2. Pflanzvorrichtung (10) nach Anspruch 1, bei der der Auslass (36) Flüssigkeitskommunikation zwischen dem Behälter (22) und dem Hohlraum (24) ermöglicht.

3. Pflanzvorrichtung (10) nach einem vorhergehenden Anspruch, bei der der Hohlraum (24) eingerichtet ist, um einen Einsatz (28) aufzunehmen, der den Hohlraum in eine obere Abteilung zum Aufnehmen von Erde und einen unteren Sumpf (26) unterteilt, der zum Aufnehmen von Fluid durch den Auslass (36) aus dem Behälter (22) eingerichtet ist.

4. Pflanzvorrichtung (10) nach Anspruch 3, bei der der Einsatz (28) einen hohlen Mittelteil (27) in Flüssigkeitskommunikation mit dem Sumpf (26) aufweist.

5. Pflanzvorrichtung (10) nach Anspruch 3, bei der der Einsatz (28) eine Mehrzahl von Öffnungen aufweist, die zum Aufnehmen von Dochten (25) zum Befördern von Flüssigkeit aus dem Sumpf (26) zu der oberen Abteilung eingerichtet sind.

6. Pflanzvorrichtung (10) nach Anspruch 5, bei der der Einsatz (28) den Sumpf (26) in einen ersten (26A) und zweiten Bereich (26B) unterteilt, und der zweite Bereich (26B) eingerichtet ist, um in Flüssigkeitskommunikation mit dem ersten Flüssigkeitsdurchgang (32) zu stehen, und wobei der zweite Bereich (26B) wesentlich weniger Öffnungen zum Aufnehmen von Dochten (25) als der erste Bereich aufweist, so dass Flüssigkeit in einer zyklischen Weise absorbiert werden kann.

7. Pflanzvorrichtung (10) nach einem vorhergehenden Anspruch, bei der der zweite Flüssigkeitsdurchgang (34) getrennt von dem ersten Flüssigkeitsdurchgang ausgebildet wird.

8. Pflanzvorrichtung (10) nach Anspruch 7, bei der sich der erste Flüssigkeitsdurchgang (32) von dem Behälter (22) direkt in den Sumpf (26) des Hohlraums (24) erstreckt.

9. Pflanzvorrichtung (10) nach einem vorhergehenden Anspruch, bei der der Hohlraum (24) die Außenfläche aufweist, zu der der zweite Flüssigkeitsdurchgang (34) verläuft.

10. Pflanzvorrichtung (10) nach einem vorhergehenden Anspruch, bei der der Behälter (22) die Außenfläche aufweist, zu der der zweite Flüssigkeitsdurchgang (34) verläuft.

11. Pflanzvorrichtung (10) nach Anspruch 10, bei der die Außenfläche auf der Außenwand (20) des Behälters (22) vorgesehen ist.

12. Pflanzvorrichtung (10) nach den Ansprüchen 1-10, bei der erste und zweite Flüssigkeitsdurchgang (34') integriert ausgebildet sind, und bei der der Flüssigkeitsdurchgang (34') einen zweiten Auslass (37') aufweist, der Flüssigkeitskommunikation zwischen dem Durchgang (34') und dem Behälter (22') ermöglicht, und bei der der Flüssigkeitsdurchgang (34') zum Aufnehmen eines Rohrs (38') eingerichtet ist, das ein innerhalb des Rohrs (32') vorgesehenes zweites koaxiales Rohr aufweist.

13. Pflanzvorrichtung (10) nach einem vorhergehenden Anspruch, die weiter eine Flüssigkeitsfüllstandanzeige aufweist, welche einen innerhalb des Behälters (22) oder des Füllrohrs (34) angeordneten magnetischen Schwimmer aufweist und eingerichtet ist, um mit einer externen Markierung zum Anzeigen eines Flüssigkeitsfüllstands in dem Behälter (22) zusammenzuwirken.

14. Pflanzvorrichtung (10) nach einem vorhergehenden Anspruch, die weiter mindestens ein Lüftungsrohr aufweist, das sich von einer Stelle im Wesentlichen nahe der Oberseite (16) des Körpers (12) durch den Hohlraum (24) erstreckt und vorzugsweise mindestens eine Öffnung aufweist, die entlang der Länge des Lüftungsrohrs angeordnet ist.

15. Pflanzvorrichtung (10) nach den Ansprüchen 1 bis 14, bei der ein O-Ring (35) an einem inneren Umfang des zweiten Durchgangs (34) oder an einem äußeren Umfang des externen Rohrs (38) unter dem Auslass (36) angeordnet ist, und der zweite Durchgang (34) einen kleineren Durchmesser als den des externen Rohrs (38) aufweist, so dass, wenn das externe Rohr (38) eingeführt wird, ein Lüftungsspalt (33) geschaffen wird.

## Revendications

1. Jardinière (10) comprenant un corps (12) muni
d'un côté supérieur (16) ;
un côté inférieur ;
une base (14) sur le côté inférieur ;
une paroi extérieure (20) qui s'étend vers le haut depuis la base (14) ;
une paroi intérieure (18) qui est en prise avec la paroi extérieure (20) et espacée de celle-ci ;
une cavité (24) formée par le corps (12) ;
un réservoir (22) délimité entre les parois intérieure (18) et extérieure (20), muni d'une sortie (36) allant de là dans la cavité (24) ;
un passage de fluide (32) à extrémité ouverte muni d'une première extrémité supérieure qui se termine dans le réservoir (22) ;
une deuxième extrémité inférieure qui se termine dans la cavité (24) ; et un deuxième passage à fluide (34) s'étendant depuis ledit réservoir (22) jusqu'à une face extérieure dudit corps (12) ;
ladite sortie (36) étant formée dans ledit deuxième passage de fluide (34) ;
**caractérisée en ce que** ladite jardinière (10) comprend en outre :
un tuyau (38) disposé pour être inséré dans ledit deuxième passage à fluide (34) pour remplir ledit réservoir (22) ; et où, en cours d'usage, ledit tuyau (38) ferme sensiblement hermétiquement ladite sortie (36) quand il remplit ledit réservoir (22).

2. Jardinière (10) conforme à la revendication 1, où ladite sortie (36) assure la communication du fluide entre ledit réservoir (22) et ladite cavité (24).

3. Jardinière (10) conforme à une quelconque des revendications précédentes, où ladite cavité (24) est disposée pour recevoir un insert (28) qui divise ladite cavité en un compartiment supérieur destiné à recevoir de la terre et un puisard inférieur (26) disposé pour recevoir du fluide par ladite sortie (36) dudit réservoir (22).

4. Jardinière (10) conforme à la revendication 3, où ledit insert (28) comprend une partie centrale creuse (27) en communication fluide avec ledit puisard (26).

5. Jardinière (10) conforme à la revendication 3, où ledit insert (28) comprend une pluralité d'ouvertures disposées pour recevoir des mèches (25) destinées à transporter du fluide depuis ledit puisard (26) jusqu'audit compartiment supérieur.

6. Jardinière (10) conforme à la revendication 5, où ledit insert (28) sépare ledit puisard (26) en une première (26A) et une deuxième (26B) zones, ladite deuxième zone (26B) étant disposée pour être en communication fluide avec ledit premier passage de fluide (32) et où ladite deuxième zone (26B) comprend sensiblement moins d'ouvertures pour recevoir des mèches (25) que ladite première zone de manière à ce que le fluide puisse être absorbé de manière cyclique.

7. Jardinière (10) conforme à une quelconque des revendications précédentes, où ledit deuxième passage de fluide (34) est formé séparément dudit premier passage de fluide.

8. Jardinière (10) conforme à la revendication 7, où ledit premier passage de fluide (32) s'étend depuis ledit réservoir (22) directement jusqu'audit puisard (26) de ladite cavité (24).

9. Jardinière (10) conforme à une quelconque des revendications précédentes, où ladite cavité (24) comprend ladite face extérieure jusqu'à laquelle ledit deuxième passage de fluide (34) s'étend.

10. Jardinière (10) conforme à une quelconque des revendications précédentes, où ledit réservoir (22) comprend ladite face extérieure jusqu'à laquelle ledit deuxième passage de fluide (34) s'étend.

11. Jardinière (10) conforme à la revendication 10, où ladite face extérieure est prévue sur ladite paroi extérieure (20) dudit réservoir (22).

12. Jardinière (10) conforme aux revendications 1 à 10, où lesdits premier et deuxième passages de fluide (34') sont formés d'une seule pièce et où ledit passage de fluide (34') comprend une deuxième sortie (37') assurant la communication fluide entre ledit passage (34') et ledit réservoir (22') et où ledit passage de fluide (34') est disposé pour recevoir un tuyau (38') comprenant un deuxième tuyau coaxial prévu à l'intérieur dudit tuyau (32').

13. Jardinière (10) conforme à une quelconque des revendications précédentes, comprenant de plus un indicateur de niveau de fluide comprenant un flotteur magnétique situé à l'intérieur dudit réservoir (22) ou tuyau de remplissage (34) et disposé pour coopérer avec un marqueur externe pour indiquer le niveau de fluide dans ledit réservoir (22).

14. Jardinière (10) conforme à une quelconque des revendications précédentes, comprenant en outre au moins un tuyau de ventilation s'étendant à proximité sensiblement étroite du côté supérieur (16) du corps (12) à travers ladite cavité (24) et comprenant de préférence au moins une ouverture disposée sur la longueur du tuyau de ventilation.

15. Jardinière (10) conforme aux revendications 1 à 14, où un joint torique (35) est disposé sur une circonférence intérieure dudit deuxième passage (34), ou sur une circonférence extérieure dudit tuyau extérieur (38) au-dessous de ladite sortie (36) et où ledit deuxième passage (34) comprend un diamètre inférieur à celui dudit tuyau extérieur (38) de sorte que, quand ledit tuyau extérieur (38) est inséré, un interstice de ventilation (33) est assuré.
